(19) **Europäisches Patentamt**
**European Patent Office**
**Office européen des brevets**

(11) **EP 1 927 249 B1**

(12) **EUROPEAN PATENT SPECIFICATION**

(45) Date of publication and mention
of the grant of the patent:
**18.07.2018 Bulletin 2018/29**

(21) Application number: **06798833.7**

(22) Date of filing: **21.09.2006**

(51) Int Cl.:
*H04N 19/196* (2014.01)   *H04N 19/463* (2014.01)
*H04N 19/597* (2014.01)   *H04N 19/176* (2014.01)
*H04N 19/61* (2014.01)   *H04N 19/136* (2014.01)

(86) International application number:
**PCT/KR2006/003750**

(87) International publication number:
**WO 2007/035042 (29.03.2007 Gazette 2007/13)**

(54) **APPARATUS AND METHOD FOR ENCODING AND DECODING MULTI-VIEW VIDEO**

VORRICHTUNG UND VERFAHREN ZUM CODIEREN UND DECODIEREN VON MEHRANSICHTS-VIDEO

DISPOSITIF ET PROCEDE POUR LE CODAGE ET LE DECODAGE VIDEO MULTIVISION

(84) Designated Contracting States:
**AT BE BG CH CY CZ DE DK EE ES FI FR GB GR HU IE IS IT LI LT LU LV MC NL PL PT RO SE SI SK TR**

(30) Priority: **21.09.2005 US 718740 P**
**03.04.2006 KR 20060030147**

(43) Date of publication of application:
**04.06.2008 Bulletin 2008/23**

(73) Proprietor: **Samsung Electronics Co., Ltd.**
**Suwon-si, Gyeonggi-do, 443-742 (KR)**

(72) Inventor: **HA, Tae-Hyeun**
**Gyeonggi-do 441-740 (KR)**

(74) Representative: **Appleyard Lees IP LLP**
**15 Clare Road**
**Halifax HX1 2HY (GB)**

(56) References cited:
**WO-A1-2004/021711**   **US-A- 5 619 256**
**US-A1- 2003 202 592**   **US-A1- 2004 165 765**

• **KIM Y ET AL: "Efficient disparity vector coding for multiview sequences", SIGNAL PROCESSING. IMAGE COMMUNICATION, ELSEVIER SCIENCE PUBLISHERS, AMSTERDAM, NL, vol. 19, no. 6, 9 June 2004 (2004-06-09), pages 539-553, XP004517248, ISSN: 0923-5965, DOI: 10.1016/J.IMAGE.2004.04.004**

## Description

## Technical Field

Apparatuses and methods consistent with the present invention relate to encoding and decoding a multi-view video, and more particularly, to encoding and decoding the multi-view video, in order to improve compressibility of the multi-view video.

## Background Art

KIM Y ET AL: "Efficient disparity vector coding for multiview sequences", SIGNAL PROCESSING. IMAGE COMMUNICATION, NL, vol. 19, no. 6, 9 June 2004 (2004-06-09), pages 539-553, XP004517248, ISSN: 0923-5965, describes a multiview sequence codec of the related art. The claims have been characterised over this document.

The new H.264 video coding standard is noted for high encoding efficiency compared to conventional standards. The new H.264 video coding standard depends on various new characteristics, such as considering a variable block size between 16x16 and 4x4, a quadtree structure for motion compensation in a loop deblocking filter, a multi-reference frame, intra prediction, and context adaptability entropy coding, as well as considering general bi-directional (B) estimation slices. Unlike the MPEG-2 standard, the MPEG-4 Part 2 standard, etc., the B slices can refer to different slices while using multi-prediction obtained from the same direction (forward or backward). However, the above-described characteristics require a large amount of data for motion information including a motion vector and/or reference picture in an estimation mode for the H.264 video coding standard.

In order to relieve this problem, a skip mode and a direct mode are respectively introduced into predicted (P) slices and B slices. The skip and direct modes allow motion estimation of an arbitrary block of a picture to be currently encoded, using motion vector information previously encoded. Accordingly, additional motion data for macroblocks (MBs) or blocks is not encoded. Motions for these modes are obtained using spatial (skip) or temporal (direct) correlation of motions of adjacent MBs or pictures.

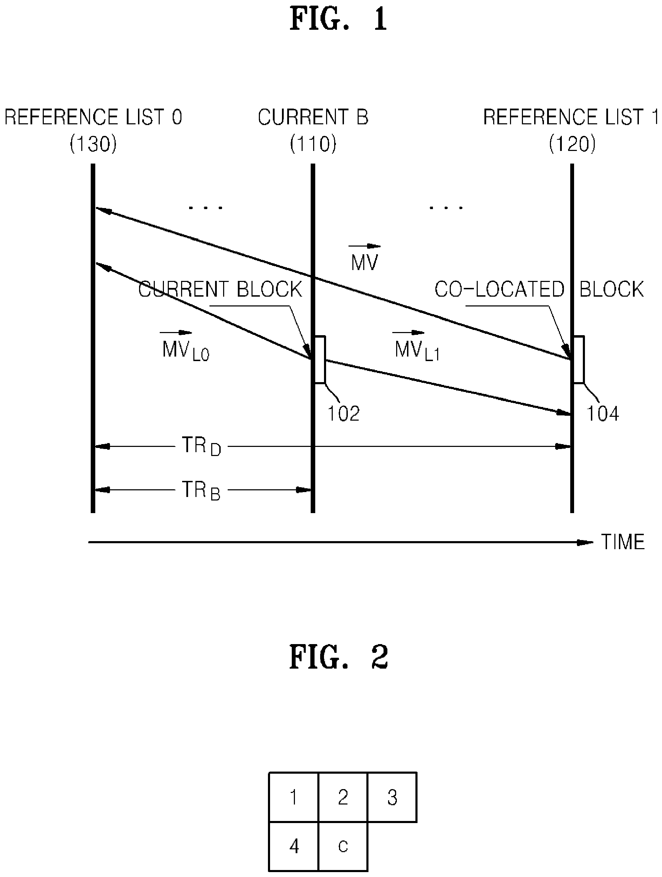

FIG. 1 is a view for explaining a direct mode of a B picture.

The direct mode is to obtain a forward motion vector and a backward motion vector using a motion vector of a co-located block of a temporally following P picture, when estimating a motion of an arbitrary block of a B picture to be currently encoded.

In order to calculate a forward motion vector MVLO and a backward motion vector MVL1 of a direct mode block 102 whose motion will be estimated in a B picture 110, a motion vector MV for a reference list 0 image 130, which a co-located block 104 which is at the same position as the direct mode block 102 in a reference list 1 picture 120 as a temporally following picture refers by a motion vector, is detected. Thus, the forward motion vector MV and the backward motion vector $MV_{L1}$ of the direct mode block 102 of the B picture 110 are calculated using the following Equations 1 and 2.

$$\overrightarrow{MV_{L0}} = \frac{TR_B}{TR_D} \times \overrightarrow{MV}$$

$$(1)$$

$$\overrightarrow{MV_{L1}} = \frac{(TR_B - TR_D)}{TR_D} \times \overrightarrow{MV}$$

$$(2)$$

where MV represents the motion vector of the co-located block 104 of the reference list 1 picture 120, TR represents a distance between the reference list 0 picture 130 and the reference list 1 picture 120, and $TR_D$ represents a distance between the B picture 110 and the reference list 0 picture 130.

FIG. 2 is a view for explaining a method of estimating a motion vector in a spatial area

According to the H.264 standard used for encoding video data, a frame is divided into blocks, each having a predetermined size, and a most similar block is searched with reference to an adjacent frame(s) subjected to encoding. That is, an intermediate value of motion vectors of a left lower macroblock 4, an upper middle macroblock 2, and an upper right macroblock 3 of a current macroblock c is determined as an estimation value of the corresponding motion vector. The motion vector estimation can be expressed by Equation 3.

$$\begin{cases} pmvx = MEDIAN(mvx2, mvx3, mvx4) \\ pmvy = MEDIAN(mvy2, mvy3, mvy4) \end{cases}$$

$$(3)$$

As such, a method of encoding a video using spatial correlation as well as temporal correlation has been proposed. However, a method of enhancing the compressibility and processing speed of a multi-view video having a significantly greater amount of information than a general video, is still required.

## Summary

According to the present invention there is provided an apparatus for encoding a multi-view video according to claim 1. Also there is provided a method for encoding a multi-view video according to claim 6, an apparatus for decoding a multi-view video according to claim 11, a method for decoding a multi-view video according to claim 14, and computer readable medium as in claims 17 and 18. Additional features of the invention will be appreciated from the dependent claims and the description herein.

In some aspects, the present invention concerns a method and apparatus for encoding a multi-view video, in order to improve compressibility of the multi-view video, using correlation between disparity vectors for multi-view videos photographed by multi-view cameras.

Since deviations for disparity vectors for respective blocks or deviations of the deviations for the disparity vectors for the respective blocks are encoded using correlation between the disparity vectors, it is possible to improve compressibility of a multi-view video.

Also, the present invention concerns a method and apparatus for decoding a multi-view video encoded using correlation between disparity vectors for the multi-view video are provided.

## Description of Drawings

The above and other aspects of the present invention will become more apparent by describing in detail exemplary embodiments thereof with reference to the attached drawings in which:

FIG. 1 is a view for explaining a direct mode of a B picture;

FIG. 2 is a view for explaining a method of estimating a motion vector in a spatial area;

FIG. 3 is a block diagram of a multi-view video encoding apparatus according to an exemplary embodiment of the present invention;

FIG. 4 is a view for explaining frame sequences photographed by multi-view cameras, according to an exemplary embodiment of the present invention;

FIG. 5 is a view for explaining the case when deviations of disparity vectors are constant, according to an exemplary embodiment of the present invention;

FIG. 6 is a graph plotting correlation between the disparity vectors when deviations of disparity vectors are constant, as illustrated in FIG. 5;

FIG. 7 is a block diagram of a multi-view video encoding apparatus according to another exemplary embodiment of the present invention;

FIG. 8 is a flowchart illustrating a multi-view video encoding method according to an exemplary embodiment of the present invention; and

FIG. 9 is a block diagram of a multi-view video decoding apparatus according to an exemplary embodiment of the present invention.

## Detailed Description

By way of introduction, there is described an apparatus for encoding a multi-view video, including: a disparity estimator which receives a current frame and a reference frame and which estimates disparity vectors between the current frame and the reference frame by the block; a disparity deviation calculator which calculates deviations between the estimated disparity vectors and calculates deviations of the deviations between the estimated disparity vectors; and an encoder which encodes the multi-view video using the calculated deviations of the disparity vectors or the calculated deviations of the deviations of the disparity vectors.

The deviations between the estimated disparity vectors are constant.

The multi-view video encoding apparatus further includes: an encoding mode selector which selects whether to encode the multi-view video using the deviations of the disparity vectors or whether to encode the multi-view video using the deviations of the deviations of the disparity vectors, according to predetermined criteria, and sets mode information accordingly, wherein the encoder encodes the multi-view video with the set mode information based on the set mode information.

The disparity deviation calculator includes: a first buffer which stores the estimated disparity vectors; a primary calculation performing unit which calculates deviations between the disparity vectors stored in the first buffer; a second buffer which stores the deviations between the disparity vectors; and a secondary calculation performing unit which calculates deviations of the deviations between the disparity vectors.

According to another aspect, there is provided a method of encoding a multi-view video, including: receiving a current frame and a reference frame and estimating disparity vectors between the current frame and the reference frame by the block; calculating deviations between the estimated disparity vectors and deviations of the deviations between the estimated disparity vectors; and encoding the multi-view video, using the deviations between the disparity vectors or the deviations of the deviations between the disparity vectors.

According to another aspect, there is provided an apparatus for decoding a multi-view video, including: an encoding mode checking unit which checks a mode information indicating a multi-view video encoding mode included in an encoded multi-view video; a disparity vector determining unit which determines disparity vectors for the multi-view video according to the checked mode information; and a decoder which decodes the multi-view video using the determined disparity vectors, wherein the mode information indicating the multi-view video encoding mode indicates that the multi-view video is encoded using deviations of disparity vectors or that the multi-view video is encoded using deviations of the deviations of the disparity vectors.

When the mode information indicates that the multi-view video is encoded using the deviations of the disparity vectors, if a deviation of a disparity vector $DV_i$ of a block positioned at a current location i is $dDV_i$, the disparity vector determining unit sums a disparity vector $DV_{i-1}$ of the previous block and the deviation $dDV_i$ of the disparity vector $DV_i$, thereby determining the disparity vector DV of the block positioned at the current i location.

According to another aspect, there is provided a method of decoding a multi-view video, including: checking a mode information indicating a multi-view video encoding mode included in an encoded multi-view video; determining disparity vectors for the multi-view video according to the checked mode information; and decoding the multi-view video using the determined disparity vectors, wherein the mode information indicating the multi-view video encoding mode indicates whether the multi-view video is encoded using deviations of the disparity vectors or whether the multi-view video is encoded using deviations of the deviations of the disparity vectors.

Hereinafter, exemplary embodiments of the present invention will be described in detail with reference to the appended drawings.

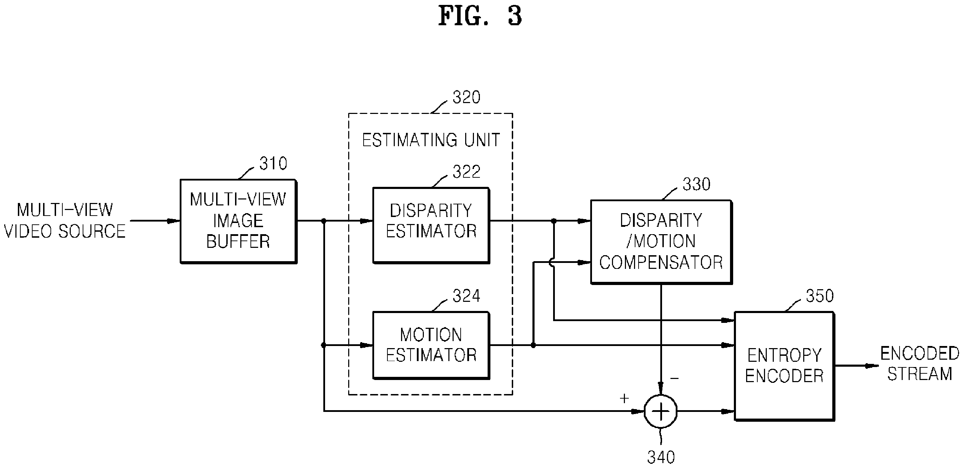

FIG. 3 is a block diagram of a multi-view video encoding apparatus according to an exemplary embodiment of the present invention.

Referring to FIG. 3, the multi-view video encoding apparatus includes a multi-view image buffer 310, an estimating unit 320, a disparity/motion compensator 330, a residual image encoder 340, and an entropy encoder 350.

In FIG. 3, the multi-view video encoding apparatus receives multi-view video source data obtained from a plurality of camera systems or using different methods. The received multi-view video source data are stored in the multi-view image buffer 310. The multi-view image buffer 310 provides the stored multi-view video source data to the estimating unit 320 and the residual image encoder 340.

The estimating unit 320 includes a disparity estimator 322 and a motion estimator 324, and performs motion estimation and disparity estimation on the stored multi-view video.

The disparity/motion compensator 330 performs disparity and motion compensation using motion vectors and disparity vectors estimated by the disparity estimator 322 and the motion estimator 324. The disparity/motion compensator 330 reconstructs an image using the motion vector and disparity vector and provides the reconstructed image to the residual image encoder 340.

The residual image encoder 340 encodes a residual image obtained by subtracting the image compensated and reconstructed by the disparity/motion compensator 330 from the original image provided by the multi-view image buffer 310 and provides the encoded residual image to the entropy encoder 350, in order to provide a better visual quality and three-dimensional effect.

The entropy encoder 350 receives information regarding the disparity vectors and the motion vectors generated by the estimating unit 320 and a residual picture from the residual image encoder 340, and generates a bitstream for the multi-view video source data.

Like motion information for motion estimation and motion compensation used in conventional codecs such as the H.264 and MPEG 2/4 standards, the disparity information estimated by the disparity estimator 322 illustrated in FIG. 3 is used for disparity compensation. As in a trial for reducing motion information and increasing encoding efficiency in the H.264 standard, a trial for reducing disparity information and increasing encoding efficiency in Multi-view Video Coding (MVC) should be performed.

According to an exemplary embodiment of the present invention, the disparity estimator 322 estimates disparity vectors in units of a predetermined number of blocks, and calculates deviations between the estimated disparity vectors or calculates deviations of the deviations, in order to improve encoding efficiency.

The multi-view video encoding according to an exemplary embodiment of the present invention is performed using the calculated deviations and the calculated deviations of the deviations.

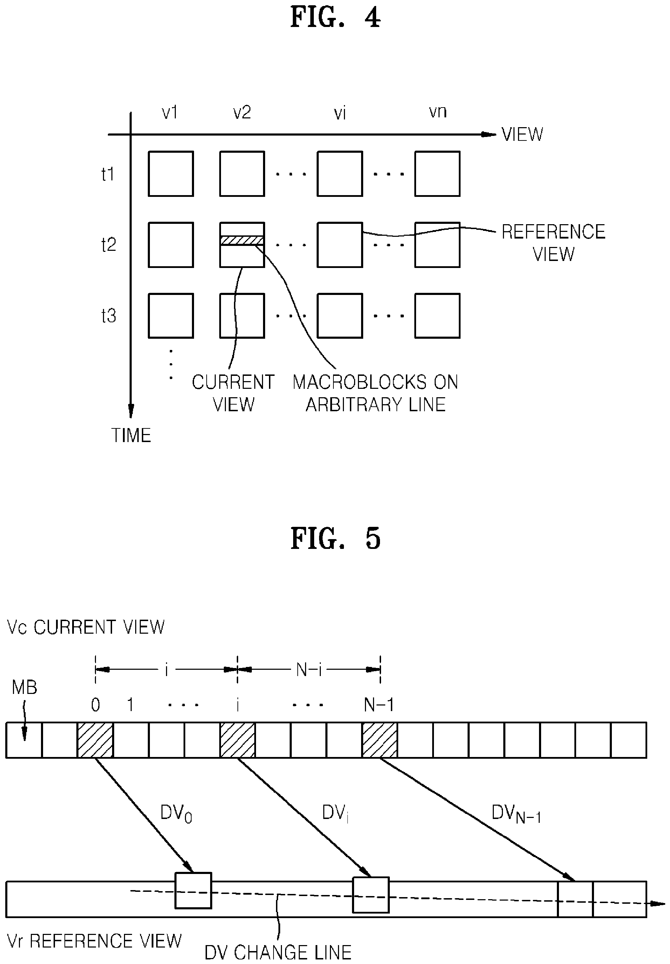

FIG. 4 is a view for explaining frame sequences photographed by multi-view cameras, according to an exemplary embodiment of the present invention.

In FIG. 4, the horizontal axis is a view axis and represents the number of multi-view cameras for photographing multi-view pictures, and the vertical axis is a time axis and represents the number of time sequences. If the multi-view cameras are arranged in parallel, high correlation will exist between multi-view frames disposed on the same time sequence. Although the multi-view cameras are not arranged in parallel, since frames photographed by the multi-view cameras can be rectified to the state photographed by multi-view cameras arranged in parallel, correlation between the photographed frames will exist. Accordingly, it is possible to encode multi-view video using the correlation between the multi-view frames.

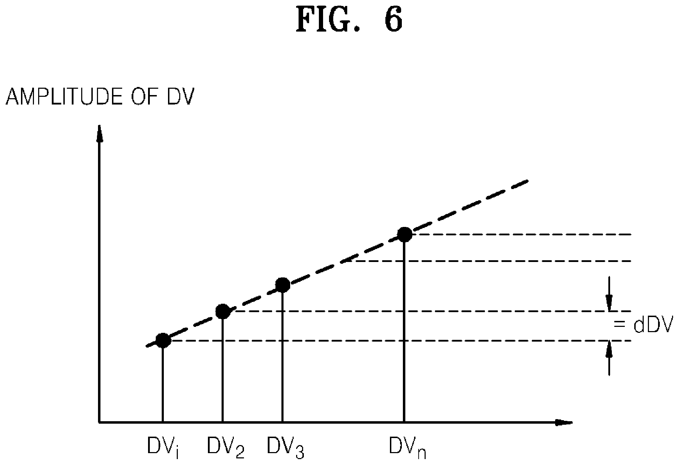

FIG. 5 is a view for explaining the case when deviations of disparity vectors are constant, according to an exemplary embodiment of the present invention, and FIG. 6 is a graph plotting correlation between the disparity vectors when deviations of disparity vectors are constant, as illustrated in FIG. 5.

In FIG. 5, Vc and Vr respectively represent lines of macroblocks (MBs) in arbitrary frames disposed on the same time sequence, wherein Vr represents an encoded reference view frame and Vc represents a frame estimated using the encoded reference view frame Vr to be currently encoded. FIG. 6 shows changes in the absolute values of the disparity vectors DV of the respective MBs.

Referring to FIG. 5, when a current MB is positioned at a location i, the previous MB is positioned at a location i-1 to the left of the current MB.

As illustrated in FIGS. 5 and 6, if it is assumed that the disparity vectors DV of successive MBs in a MB line linearly change, a deviation (difference) $dDV_i$ between a disparity vector $DV_i$ of the MB at the predetermined location i and a disparity vector $DV_{i-1}$ of the previous MB is constant. For example, in FIG. 6, $dDV_2 = DV_2 - DV_1$, $dDV_3 = DV_3 - DV_2$, $dDV_4 = DV_4 - DV_3$, and $dDV_n = DV_n - DV_{n-1}$. That is, all calculated dDV values are constant. Accordingly, if a disparity vector is encoded using an initial DV value and an initial dDV value, a decoding apparatus can estimate disparity vectors DV of respective MBs using the DV value and the dDV value.

A relationship between deviations dDV of disparity vectors DV of adjacent MBs of the predetermined MB can be expressed as ddDV which is a deviation of the deviations dDV of the disparity vectors DV. If a deviation of a deviation of a disparity vector of a MB positioned at a current location i is $ddDV_i$, since $ddDV_i = dDV_i - dDV_{i-1}$, deviations ddDV of deviations dDV of all disparity vectors DV become zero in case of FIGS. 5 and 6. Accordingly, when a multi-view video is encoded using $ddDV_i$, the decoding apparatus can calculate a deviation $dDV_i$ of a disparity vector $DV_i$ of the current MB, using $ddDV_i$ and $dDV_{i-1}$ which is a deviation of a disparity vector $DV_{i-1}$ of the previous MB and of the current MB. That is, a deviation $dDV_i$ of a disparity vector $DV_i$ of the current MB positioned at the current location i can be calculated using the following Equation 4.

$$dDV_i = dDV_{i-1} + ddDV_i \quad (4)$$

If the deviation $dDV_i$ is calculated, a disparity vector $DV_i$ of the current MB positioned at the current location i can be also calculated using Equation 5.

$$DV_i = DV_{i-1} + dDV_i \quad (5)$$

As described above, by encoding a multi-view video using a deviation dDV of a disparity vector DV or a deviation ddDV of the deviation dDV of the disparity vector DV, encoding efficiency of the multi-view video can be enhanced. Also, encoding ddDV can have higher compression efficiency compared to encoding dDV. A disparity vector DV required for decoding a multi-view video encoded using dDV or ddDV can be determined using Equations 4 and 5.

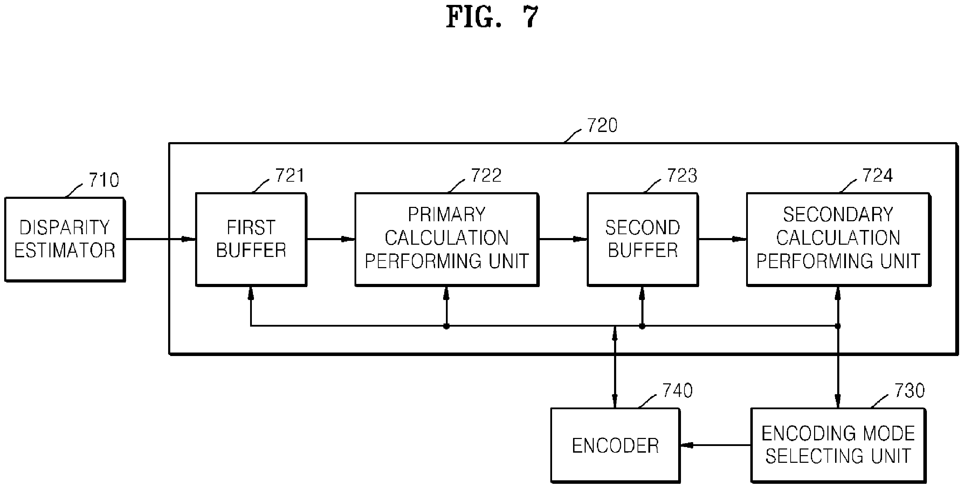

FIG. 7 is a block diagram of a multi-view video encoding apparatus according to another exemplary embodiment of the present invention.

Referring to FIG. 7, the multi-view video encoding apparatus includes a disparity estimator 710, a disparity deviation calculator 720, an encoding mode selecting unit 730, and an encoder 740. The disparity deviation calculator 720 includes a first buffer 721 which temporarily stores disparity vectors, a primary calculation performing unit 722 which calculates deviations of the disparity vectors, a second buffer 723 which temporarily stores the deviations of the disparity vectors, and a secondary calculation performing unit 724 which calculates deviations of the deviations.

First, a current frame and a reference frame, which are successive frames, are input to the disparity estimator 710. The disparity estimator 710 estimates disparity vectors DV by the predetermined block between two frames, for example, by the macroblock (MB) between two frames. Here, deviations between disparity vectors by the predetermined block can be constant.

The disparity deviation calculator 720 calculates deviations between estimated disparity vectors or calculates deviations of the deviations between the estimated disparity vectors. First, estimated disparity vectors by the block are input to the first buffer 721 of the disparity deviation calculator 720 and temporarily stored in the first buffer 721. Then, the estimated disparity vectors by the block are transferred to the primary calculation performing unit 722. When a disparity vector of a block positioned at a current location i is $DV_i$, the primary calculation performing unit 722 calculates a deviation $dDV_i$ of the disparity vector $DV_i$, which is a difference between the disparity vector $DV_i$ and the previous disparity vector $DV_{i-1}$.

The calculated deviation $dDV_i$ of the disparity vector $DV_i$ is transferred to the second buffer 723 and temporarily stored therein. The deviation $dDV_i$ of the disparity vector $DV_i$ temporarily stored in the second buffer 723 is transferred to the secondary calculation performing unit 724. The secondary calculation performing unit 724 calculates a deviation $ddDV_i$ of the deviation $dDV_i$ of the disparity vector $DV_i$, which is a difference between the deviation $dDV_i$ and a deviation $dDV_{i-1}$ of the previous disparity vector $DV_{i-1}$.

The encoder 740 encodes a multi-view video, using the deviations of disparity vectors or the deviations of the deviations of disparity vectors, calculated by the disparity deviation calculator 720.

The encoding mode selecting unit 730 selects whether to encode the multi-view video using the deviation $dDV_i$ of the disparity vector $DV_i$ or whether to encode the multi-view video using the deviation $ddDV_i$ of the deviation $dDV_i$ of the disparity vector $DV_i$, according to predetermined criteria. The encoding mode selecting unit 730 sets a mode information, for example, flag Flag_ddDV and transfers it to the encoder 740, in order to distinguish when the multi-view video is encoded using the deviation $dDV_i$ of the disparity vector $DV_i$ from when the multi-view video is encoded using the deviation $ddDV_i$ of the deviation $dDV_i$ of the disparity vector $DV_i$. The mode information includes information about encoding mode and is not limited to type of information. It is possible that alternative method can be used, in order to distinguish when the multi-view video is encoded using the deviation $dDV_i$ of the disparity vector $DV_i$ from when the multi-view video is encoded using the deviation $ddDV_i$ of the deviation $dDV_i$ of the disparity vector $DV_i$.

If the encoding mode selecting unit 730 selects an encoding mode of encoding the multi-view video using the deviation $dDV_i$, the encoding mode selecting unit 730 can set the flag Flag_ddDV to 0 and transfer it to the encoder 740. If the encoding mode selecting unit 730 selects an encoding mode of encoding the multi-view video using the deviation $ddDV_i$ of the deviation $dDV_i$, the encoding mode selecting unit 730 can set the flag Flag_ddDV to 1 and transfer it to the encoder 740.

The encoder 740 can encode the multi-view video from the flag value transferred from the encoding mode selecting unit 730. If the flag Flag_ddDV is set to 0, the encoder 740 encodes the multi-view video using the deviation $dDV_i$ with the flag information. If the flag Flag_ddDV is set to 1, the encoder 740 encodes the multi-view video using the deviation $ddDV_i$ of the deviation $dDV_i$ with the flag information.

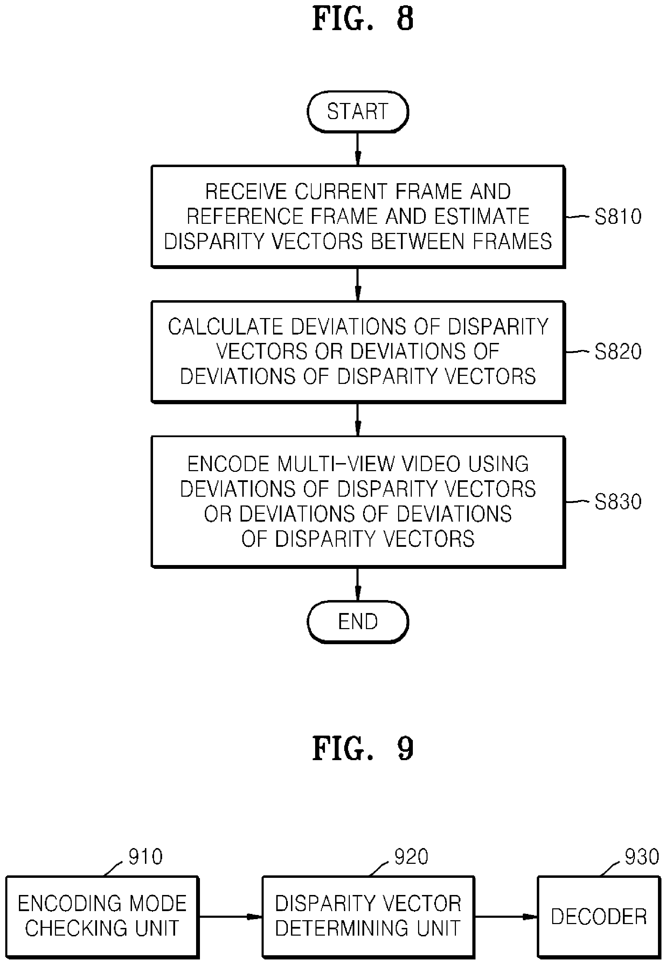

FIG. 8 is a flowchart illustrating a multi-view video encoding method according to an exemplary embodiment of the present invention.

Referring to FIG. 8, first, a current frame and a reference frame are received, and disparity vectors between frames are estimated by the predetermined block (operation S810). Then, deviations between the estimated disparity vectors or deviations of the deviations between the estimated disparity vectors are calculated (operation S820). A multi-view video is encoded using the deviations of the disparity vectors or the deviations of the deviations of the disparity vectors (operation S830). Between operation S820 and operation S830, there can be further included an operation of selecting whether to encode the multi-view video using the deviations between the disparity vectors or whether to encode the multi-view video using the deviations of the deviations of the disparity vectors, according to predetermined criteria. When operation S830 is performed, the multi-view video can be encoded according to a selected encoding mode.

FIG. 9 is a block diagram of a multi-view video decoding apparatus according to an exemplary embodiment of the present invention.

Referring to FIG. 9, the multi-view video decoding apparatus includes a decoding mode checking unit 910, a disparity vector determining unit 920, and a decoder 930.

The decoding mode checking unit 910 checks a mode information, for example, flags representing a multi-view video encoding mode included in a received encoded multi-view video.

The disparity vector determining unit 920 determines disparity vectors for the multi-view video according to the checked flags.

Hereinafter, a process of allowing the disparity vector determining unit 920 to determine disparity vectors will be described. It is assumed that a flag indicates that encoding is performed using deviations of disparity vectors and a deviation of a disparity vector $DV_i$ of a predetermined block (for example, a macroblock) positioned at a current location i is $dDV_i$. In this case, by summing a disparity vector $DV_{i-1}$ of the previous macroblock and the deviation $dDV_i$ of the disparity vector $DV_i$, the disparity vector $DV_i$ of the macroblock positioned at the current location i is determined.

When the flag indicates that encoding is performed using deviations of deviations of disparity vectors, the disparity vectors can be determined as follows. First, if a deviation of a deviation $dDV_i$ of a disparity vector $DV_i$ of a macroblock positioned at a current location i is $ddDV_i$, by summing a deviation $dDV_{i-1}$ of a disparity vector $DV_{i-1}$ of the previous macroblock and the deviation $ddDV_i$ of the deviation $dDV_i$ of the disparity vector $DV_i$, the deviation $dDV_i$ of the disparity vector $DV_i$ of the macroblock positioned at the current location i is determined. Then, by summing the disparity vector $DV_{i-1}$ of the previous macroblock and the determined deviation $dDV_i$ of the disparity vector $DV_i$, the disparity vector $DV_i$ of the macroblock positioned at the current location i is determined.

The decoder 930, as described above, decodes a multi-view video using a disparity vector determined according to the checked flag, that is, according to the checked decoding mode.

The invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion.

As described above, according to the present invention, since deviations for disparity vectors for respective blocks or deviations of the deviations for the disparity vectors for the respective blocks are encoded using correlation between the disparity vectors, it is possible to improve compressibility of a multi-view video.

Also, according to the present invention, a method and apparatus for decoding a multi-view video encoded using correlation between disparity vectors for the multi- view video are provided.

While the present invention has been particularly shown and described with reference to exemplary embodiments thereof, it will be understood by those of ordinary skill in the art that various changes in form and details may be made therein without departing from the scope of the present invention as defined by the following claims.

**Claims**

1. An apparatus for encoding a multi-view video, the apparatus comprising:

a disparity estimator (710) which receives a current frame and a reference frame, and estimates disparity vectors between blocks of the current frame and the reference frame,
wherein the current frame belongs to a current view and the reference frame belongs to a reference view different from the current view **characterized in that** the apparatus further comprises
a disparity difference calculator (720) which calculates differences between the disparity vectors of successive blocks in the current frame and calculates differences of the differences between the disparity vectors; and
an encoder (740) which encodes the multi-view video using the differences of the differences between the disparity vectors.

2. The apparatus of claim 1, wherein the disparity estimator (710) estimates the disparity vectors between the current frame and the reference frame in units of a predetermined number of blocks.

3. The apparatus of claim 1, wherein apparatus is arranged to receive the current frame and the reference frame wherein the differences between the disparity vectors are constant.

4. The apparatus of claim 1, further comprising:

   an encoding mode selector (730) which selects whether to encode the multi-view video using the differences between the disparity vectors or whether to encode the multi-view video using the differences of the differences between the disparity vectors, according to predetermined criteria, and sets mode information based on a result of the selection, and
   wherein the encoder (740) encodes the multi-view video based on the mode information.

5. The apparatus of claim 1, wherein the disparity difference calculator (720) comprises:

   a first buffer (721) which stores the disparity vectors;
   a primary calculation performing unit (722) which calculates differences between the disparity vectors stored in the first buffer;
   a second buffer (723) which stores the differences between the disparity vectors; and
   a secondary calculation performing unit (724) which calculates the deviations of the differences between the disparity vectors.

6. A method of encoding a multi-view video, the method comprising:

receiving a current frame and a reference frame;
estimating disparity vectors between blocks of the current frame and the reference frame; calculating differences between the disparity vectors, ,
wherein the current frame belongs to a current view and the reference frame belongs to a reference view different from the current view

**characterized by:**

   calculating differences between the disparity vectors of successive blocks in the current frame and calculating differences of the differences between the disparity vectors; and
   encoding the multi-view video the differences of the differences between the disparity vectors.

7. The method of claim 6, wherein the step of estimating the disparity vectors between the current frame and the reference frame is in units of a predetermined number of blocks.

8. The method of claim 6, wherein the differences between the disparity vectors are constant.

9. The method of claim 6, further comprising:

   selecting whether to encode the multi-view video using the differences between the disparity vectors or whether to encode the multi-view video using the differences of the differences between the disparity vectors; and
   setting mode information according to a result of the selecting, wherein the encoding the multi-view video comprises encoding the multi-view video based on the mode information.

10. The method of claim 6, wherein the calculating the differences between the disparity vectors or the differences of the differences between the estimated disparity vectors comprises:

   storing the disparity vectors;
   calculating the differences between the disparity vectors;
   storing the differences between the disparity vectors; and
   calculating the differences of the differences between the disparity vectors.

11. An apparatus for decoding a multi-view video, the apparatus comprising:

   an encoding mode checking unit (910) which checks a mode information indicating a multi-view video encoding mode included in an encoded multi-view video;

a disparity vector determining unit (920) which determines disparity vectors between blocks of a current frame and a reference frame of the multi-view video according to a result of checking the mode information; , wherein the current frame belongs to a current view and the reference frame belongs to a reference view different from the current view and

a decoder (930) which decodes the multi-view video using the disparity vectors,

**characterized in that:**

the mode information indicating the multi-view video encoding mode indicates whether a current block of the multi-view video is encoded using differences of the differences between the disparity vectors, and

the disparity vector determining unit (920), if the mode information indicates that the current block of the multi-view video is encoded using the difference of the differences between disparity vectors, sums a previous difference of disparity vectors and the difference of the differences of disparity vectors to determine a current difference of disparity vectors, and sums the disparity vector of a previous block and the current difference of disparity vectors to determine the disparity vector of the current block.

12. The apparatus of claim 11, wherein the disparity vector determining unit (920), if the mode information indicates that the multi-view video is encoded using the differences between the disparity vectors and a difference of a disparity vector DVi of a block positioned at a current location i is dDVi, sums a disparity vector DVi-I of a previous block and the difference dDVi of the disparity vector DVi to determine the disparity vector DVi of the block positioned at the current i location.

13. The apparatus of clam 11 , wherein the disparity vector determining unit (920), if the mode information indicates that the multi-view video is encoded using the differences of the differences between the disparity vectors and a difference of a difference dDVi of a disparity vector DVi of a block positioned at a current location i is ddDVi, sums a difference dDVi-1 of a disparity vector DVi-I of a previous block and the difference ddDVi of the difference dDVi of the disparity vector DVi to determine the difference dDVi of the disparity vector DVi of the block positioned at the current location i, and sums the disparity vector DVi-I of the previous block and the difference dDVi of the disparity vector DVi to determine the disparity vector DVi of the block positioned at the current i location.

14. A method of decoding a multi-view video, the method comprising:

checking a mode information indicating a multi-view video encoding mode included in an encoded multi-view video; determining disparity vectors between blocks of a current frame and a reference frame of the multi-view video according to a result of the checking the mode information, wherein the current frame belongs to a current view and the reference frame belongs to a reference view different from the current view; and decoding the multi-view video using the disparity vectors,

**characterized by:**

in the checking step, the mode information indicating the multi-view video encoding mode indicates whether a current block of the multi-view video is encoded using differences of the differences between disparity vectors, and

summing, if the mode information indicates that the current block of the multi-view video is encoded using the difference of the differences between disparity vectors, a previous difference of disparity vectors and the difference of the differences of the disparity vectors to determine a current difference of disparity vectors, and sums the disparity vector of a previous block and the current difference of disparity vectors to determine the disparity vector of the current block.

15. The method of claim 14, wherein the determining the disparity vectors comprises:
if the mode information indicates that the multi-view video is encoded using the differences between the disparity vectors and a difference of a disparity vector DVi of a block positioned at a current location i is dDVi, summing a disparity vector DVi-I of a previous block and the difference dDVi of the disparity vector DVi to determine the disparity vector DVi of the block positioned at the current location i.

16. The method of claim 14, wherein the determining the disparity vectors comprises:
if the mode information indicates that the multi-view video is encoded using the differences of the differences between the disparity vectors and a difference of a difference dDVi of a disparity vector DVi of a block positioned at a current location i is ddDVi, summing a difference dDVi-1 of a disparity vector DVi-I of a previous block and the difference ddDVi of the difference dDVi of the disparity vector DVi to determine the difference dDVi of the disparity vector DVi of the block positioned at the current location i; and summing the disparity vector DVi-I of the previous block and the difference dDVi of the disparity vector DVi to determine the disparity vector DVi of the block positioned at the current location i.

17. A computer-readable recording medium storing a computer program for executing a method of encoding a multi-view video, the method comprising:

receiving a current frame and a reference frame; estimating disparity vectors between blocks of the current frame and the reference frame; calculating differences between the disparity vectors, wherein the current frame belongs to a current view and the reference frame belongs to a reference view different from the current view; **characterized by:** calculating differences between the disparity vectors of successive blocks in the current frame and calculating differences of the differences between the disparity vectors; and encoding the multi-view video, using the differences of the differences between the disparity vectors.

18. A computer-readable recording medium storing a computer program for executing a method of decoding a multi-view video, the method comprising:

checking a mode information indicating a multi-view video encoding mode included in an encoded multi-view video; determining disparity vectors between blocks of a current frame and a reference frame of the multi-view video according to a result of the checking the mode information, wherein the current frame belongs to a current view and the reference frame belongs to a reference view different from the current view; and decoding the multi-view video using the disparity vectors, **characterized by:**

the mode information indicating the multi-view video encoding mode indicates whether a current block of the multi-view video is encoded using differences of the differences between disparity vectors, and summing, if the mode information indicates that the current block of the multi-view video is encoded using the differences of the differences between disparity vectors, a previous difference of disparity vectors and the difference of the difference of the disparity vectors to determine a current difference of disparity vectors, and sums the disparity vector of a previous block and the current difference of disparity vectors to determine the disparity vector of the current block.

**Patentansprüche**

1. Vorrichtung zum Codieren eines Mehransichtsvideos, wobei die Vorrichtung Folgendes umfasst:

einen Unterschiedsschätzer (710), welcher einen aktuellen Rahmen und einen Referenzrahmen empfängt und Unterschiedsvektoren zwischen Blöcken des aktuellen Rahmens und des Referenzrahmens schätzt, wobei der aktuelle Rahmen zu einer aktuellen Ansicht gehört und der Referenzrahmen zu einer Referenzansicht gehört, die sich von der aktuellen Ansicht unterscheidet, **dadurch gekennzeichnet, dass** die Vorrichtung ferner umfasst:

einen Unterschiedsdifferenzberechner (720), welcher Differenzen zwischen den Unterschiedsvektoren von aufeinanderfolgenden Blöcken in dem aktuellen Rahmen berechnet und Differenzen der Differenzen zwischen den Unterschiedsvektoren berechnet; und einen Codierer (740), welcher das Mehransichtsvideo unter Verwendung der Differenzen der Differenzen zwischen Unterschiedsvektoren berechnet.

2. Vorrichtung nach Anspruch 1, wobei der Unterschiedsschätzer (710) die Unterschiedsvektoren zwischen dem aktuellen Rahmen und dem Referenzrahmen in Einheiten einer vorbestimmten Blockanzahl schätzt.

3. Vorrichtung nach Anspruch 1, wobei die Vorrichtung eingerichtet ist zum Empfangen des aktuellen Rahmens und des Referenzrahmens, wobei die Differenzen zwischen den Unterschiedsvektoren konstant sind.

4. Vorrichtung nach Anspruch 1, ferner umfassend:

einen Codiermoduswähler (730), welcher auswählt, ob das Mehransichtsvideo unter Verwendung der Differenzen zwischen den Unterschiedsvektoren codiert werden soll oder ob das Mehransichtsvideo unter Verwendung der Differenzen der Differenzen zwischen den Unterschiedsvektoren gemäß den vorbestimmten Kriterien codiert werden soll, und Modusinformationen basierend auf einem Ergebnis der Auswahl einstellt, und wobei der Codierer (740) das Mehransichtsvideo basierend auf den Modusinformationen codiert.

5. Vorrichtung nach Anspruch 1, wobei der Unterschiedsdifferenzberechner (720) Folgendes umfasst:

einen ersten Puffer (721), welcher die Unterschiedsvektoren speichert;

eine Primärberechnungsdurchführungseinheit (722), welche Differenzen zwischen den in dem ersten Puffer gespeicherten Unterschiedsvektoren berechnet;

einen zweiten Puffer (723), welcher die Differenzen zwischen den Unterschiedsvektoren speichert; und

eine Sekundärberechnungsdurchführungseinheit (724), welche die Abweichungen der Differenzen zwischen den Unterschiedsvektoren berechnet.

6. Verfahren zum Codieren eines Mehransichtsvideos, wobei das Verfahren Folgendes umfasst:

Empfangen eines aktuellen Rahmens und eines Referenzrahmens;

Schätzen von Unterschiedsvektoren zwischen Blöcken des aktuellen Rahmens und des Referenzrahmens;

Berechnen von Differenzen zwischen den Unterschiedsvektoren,

wobei der aktuelle Rahmen zu einer aktuellen Ansicht gehört und der Referenzrahmen zu einer Referenzansicht gehört, die sich von der aktuellen Ansicht unterscheidet,

**gekennzeichnet durch**:

Berechnen von Differenzen zwischen den Unterschiedsvektoren von aufeinanderfolgenden Blöcken in dem aktuellen Rahmen und Berechnen von Differenzen der Differenzen zwischen den Unterschiedsvektoren; und

Codieren des Mehransichtsvideos der Differenzen der Differenzen zwischen den Unterschiedsvektoren.

7. Verfahren nach Anspruch 6, wobei der Schritt des Schätzens der Unterschiedsvektoren zwischen dem aktuellen Rahmen und dem Referenzrahmen in Einheiten einer vorbestimmten Blockanzahl erfolgt.

8. Verfahren nach Anspruch 6, wobei die Differenzen zwischen den Unterschiedsvektoren konstant sind.

9. Verfahren nach Anspruch 6, ferner umfassend:

Auswählen, ob das Mehransichtsvideo unter Verwendung der Differenzen zwischen den Unterschiedsvektoren codiert werden soll oder ob das Mehransichtsvideo unter Verwendung der Differenzen der Differenzen zwischen den Unterschiedsvektoren codiert werden soll; und Einstellen von Modusinformationen gemäß einem Ergebnis der Auswahl, wobei das Codieren des Mehransichtsvideos Codieren des Mehransichtsvideos basierend auf den Modusinformationen umfasst.

10. Verfahren nach Anspruch 6, wobei das Berechnen der Differenzen zwischen den Unterschiedsvektoren oder der Differenzen der Differenzen zwischen den geschätzten Unterschiedsvektoren Folgendes umfasst:

Speichern der Unterschiedsvektoren;

Berechnen der Differenzen zwischen den Unterschiedsvektoren;

Speichern der Differenzen zwischen den Unterschiedsvektoren; und

Berechnen der Differenzen der Differenzen zwischen den Unterschiedsvektoren.

11. Vorrichtung zum Decodieren eines Mehransichtsvideos, wobei die Vorrichtung Folgendes umfasst:

eine Codiermodusprüfeinheit (910), welche Modusinformationen prüft, die einen in einem codierten Mehransichtsvideo enthaltenen Mehransichtsvideo-Codiermodus angeben;

eine Unterschiedsvektorbestimmungseinheit (920), welche Unterschiedsvektoren zwischen Blöcken eines aktuellen Rahmens und eines Referenzrahmens des Mehransichtsvideos gemäß einem Ergebnis des Prüfens der Modusinformationen bestimmt; wobei der aktuelle Rahmen zu einer aktuellen Ansicht gehört und der Referenzrahmen zu einer Referenzansicht gehört, die sich von der aktuellen Ansicht unterscheidet, und

einen Decodierer (930), welcher das Mehransichtsvideo unter Verwendung der Unterschiedsvektoren decodiert,

**dadurch gekennzeichnet, dass**:

die den Mehransichtsvideo-Codiermodus angebenden Modusinformationen angeben, ob ein aktueller Block des Mehransichtsvideos unter Verwendung von Differenzen der Differenzen zwischen den Unterschiedsvektoren codiert ist, und

die Unterschiedsvektorbestimmungseinheit (920), falls die Modusinformationen angeben, dass der aktuelle Block des Mehransichtsvideos unter Verwendung der Differenzen der Differenzen zwischen Unterschiedsvektoren codiert ist, eine frühere Differenz von Unterschiedsvektoren und die Differenz der Differenzen von Unterschiedsvektoren summiert, um eine aktuelle Differenz von Unterschiedsvektoren zu bestimmen, und den Unterschiedsvektor eines früheren Blocks und die aktuelle Differenz von Unterschiedsvektoren summiert, um den Unterschiedsvektor des aktuellen Blocks zu bestimmen.

12. Vorrichtung nach Anspruch 11, wobei die Unterschiedsvektorbestimmungseinheit (920), falls die Modusinformationen angeben, dass das Mehransichtsvideo unter Verwendung der Differenzen zwischen den Unterschiedsvektoren codiert ist, und eine Differenz eines Unterschiedsvektors DVi eines an einem aktuellen Ort i positionierten Blocks dDvi ist, einen Unterschiedsvektor DVi-I eines früheren Blocks und die Differenz dDVi des Unterschiedsvektors DVi summiert, um den Unterschiedsvektor DVi des an dem aktuellen Ort i positionierten Blocks zu bestimmen.

13. Vorrichtung nach Anspruch 11, wobei die Unterschiedsvektorbestimmungseinheit (920), falls die Modusinformationen angeben, dass das Mehransichtsvideo unter Verwendung der Differenzen der Differenzen zwischen den Unterschiedsvektoren codiert ist, und eine Differenz einer Differenz dDVi eines Unterschiedsvektors DVi eines an einem aktuellen Ort i positionierten Blocks ddDvi ist, eine Differenz dDVi-1 eines Unterschiedsvektors DVi-I eines früheren Blocks und die Differenz ddDVi der Differenz dDVi des Unterschiedsvektors DVi summiert, um die Differenz dDVi des Unterschiedsvektors DVi des an dem aktuellen Ort i positionierten Blocks zu bestimmen, und den Unterschiedsvektor DVi-I des früheren Blocks und die Differenz dDVi des Unterschiedsvektors DVi summiert, um den Unterschiedsvektor DVi des an dem aktuellen Ort i positionierten Blocks zu bestimmen.

14. Verfahren zum Decodieren eines Mehransichtsvideos, wobei das Verfahren Folgendes umfasst:

Prüfen einer Modusinformation, die einen in einem codierten Mehransichtsvideo enthaltenen Mehransichtsvideo-Codiermodus angibt; Bestimmen von Unterschiedsvektoren zwischen Blöcken eines aktuellen Rahmens und eines Referenzrahmens des Mehransichtsvideos gemäß einem Ergebnis des Prüfens der Modusinformationen, wobei der aktuelle Rahmen zu einer aktuellen Ansicht gehört und der Referenzrahmen zu einer Referenzansicht gehört, die sich von der aktuellen Ansicht unterscheidet, und Decodieren des Mehransichtsvideos unter Verwendung der Unterschiedsvektoren, **dadurch gekennzeichnet, dass**:

in dem Prüfschritt, die den Mehransichtsvideo-Codiermodus angebenden Modusinformationen angeben, ob ein aktueller Block des Mehransichtsvideos unter Verwendung von Differenzen der Differenzen zwischen Unterschiedsvektoren codiert ist, und

Summieren, wenn die Modusinformationen angeben, dass der aktuelle Block des Mehransichtsvideos unter Verwendung der Differenzen der Differenzen zwischen Unterschiedsvektoren codiert ist, einer früheren Differenz von Unterschiedsvektoren und der Differenz der Differenzen der Unterschiedsvektoren, um eine aktuelle Differenz von Unterschiedsvektoren zu bestimmen, und den Unterschiedsvektor eines früheren Blocks und die aktuelle Differenz von Unterschiedsvektoren summiert, um den Unterschiedsvektor des aktuellen Blocks zu bestimmen.

15. Verfahren nach Anspruch 14, wobei das Bestimmen der Unterschiedsvektoren umfasst:
falls die Modusinformationen angeben, dass das Mehransichtsvideo unter Verwendung der Differenzen zwischen den Unterschiedsvektoren codiert ist, und eine Differenz eines Unterschiedsvektors DVi eines an einem aktuellen Ort i positionierten Blocks dDvi ist, Summieren eines Unterschiedsvektors DVi-I eines früheren Blocks und der Differenz dDVi des Unterschiedsvektors DVi, um den Unterschiedsvektor DVi des an dem aktuellen Ort i positionierten Blocks zu bestimmen.

16. Verfahren nach Anspruch 14, wobei das Bestimmen der Unterschiedsvektoren umfasst:
falls die Modusinformationen angeben, dass das Mehransichtsvideo unter Verwendung der Differenzen der Differenzen zwischen den Unterschiedsvektoren codiert ist, und eine Differenz einer Differenz dDVi eines Unterschiedsvektors DVi eines an einem aktuellen Ort i positionierten Blocks ddDvi ist, Summieren einer Differenz dDVi-1 eines Unterschiedsvektors DVi-I eines früheren Blocks und der Differenz ddDVi der Differenz dDVi des Unterschiedsvektors DVi, um die Differenz dDVi des Unterschiedsvektors DVi des an dem aktuellen Ort i positionierten Blocks zu bestimmen, und Summieren des Unterschiedsvektors DVi-I des früheren Blocks und der Differenz dDVi des Unterschiedsvektors DVi, um den Unterschiedsvektor DVi des an dem aktuellen Ort i positionierten Blocks zu bestimmen.

17. Computerlesbares Aufzeichnungsmedium, das ein Computerprogramm speichert zum Ausführen eines Verfahrens zum Codieren eines Mehransichtsvideos, wobei das Verfahren Folgendes umfasst:

Empfangen eines aktuellen Rahmens und eines Referenzrahmens; Schätzen von Unterschiedsvektoren zwischen Blöcken des aktuellen Rahmens und des Referenzrahmens; Berechnen von Differenzen zwischen den Unterschiedsvektoren, wobei der aktuelle Rahmen zu einer aktuellen Ansicht gehört und der Referenzrahmen zu einer Referenzansicht gehört, die sich von der aktuellen Ansicht unterscheidet, **gekennzeichnet durch**:

Berechnen von Differenzen zwischen den Unterschiedsvektoren von aufeinanderfolgenden Blöcken in dem aktuellen Rahmen und Berechnen von Differenzen der Differenzen zwischen den Unterschiedsvektoren; und Codieren des Mehransichtsvideos unter Verwendung der der Differenzen der Differenzen zwischen den Unterschiedsvektoren.

18. Computerlesbares Aufzeichnungsmedium, das ein Computerprogramm speichert zum Ausführen eines Verfahrens zum Decodieren eines Mehransichtsvideos, wobei das Verfahren Folgendes umfasst:

Prüfen einer Modusinformation, die einen in einem codierten Mehransichtsvideo enthaltenen Mehransichtsvideo-Codiermodus angibt; Bestimmen von Unterschiedsvektoren zwischen Blöcken eines aktuellen Rahmens und eines Referenzrahmens des Mehransichtsvideos gemäß einem Ergebnis des Prüfens der Modusinformationen, wobei der aktuelle Rahmen zu einer aktuellen Ansicht gehört und der Referenzrahmen zu einer Referenzansicht gehört, die sich von der aktuellen Ansicht unterscheidet, und Decodieren des Mehransichtsvideos unter Verwendung der Unterschiedsvektoren, **dadurch gekennzeichnet, dass**:

die den Mehransichtsvideo-Codiermodus angebenden Modusinformationen angeben, ob ein aktueller Block des Mehransichtsvideos unter Verwendung von Differenzen der Differenzen zwischen Unterschiedsvektoren codiert ist, und Summieren, wenn die Modusinformationen angeben, dass der aktuelle Block des Mehransichtsvideos unter Verwendung der Differenzen der Differenzen zwischen Unterschiedsvektoren codiert ist, einer früheren Differenz von Unterschiedsvektoren und der Differenz der Differenz der Unterschiedsvektoren, um eine aktuelle Differenz von Unterschiedsvektoren zu bestimmen, und den Unterschiedsvektor eines früheren Blocks und die aktuelle Differenz von Unterschiedsvektoren summiert, um den Unterschiedsvektor des aktuellen Blocks zu bestimmen.

**Revendications**

1. Appareil pour coder une vidéo multi-vue, lequel appareil comprend :

un estimateur de disparité (710) qui reçoit une trame courante et une trame de référence, et qui estime des vecteurs de disparité entre des blocs de la trame courante et de la trame de référence, dans lequel la trame courante appartient à une vue courante et la trame de référence appartient à une vue de référence différente de la vue courante, **caractérisé en ce que** l'appareil comprend en outre :

un calculateur de différence de disparité (720) qui calcule des différences entre les vecteurs de disparité de blocs successifs dans la trame courante et qui calcule des différences des différences entre les vecteurs de disparité ; et un codeur (740) qui code la vidéo multi-vue en utilisant les différences des différences entre les vecteurs de disparité.

2. Appareil selon la revendication 1, dans lequel l'estimateur de disparité (710) estime les vecteurs de disparité entre la trame courante et la trame de référence en unités d'un nombre prédéterminé de blocs.

3. Appareil selon la revendication 1, lequel appareil est conçu pour recevoir la trame courante et la trame de référence, dans lequel les différences entre les vecteurs de disparité sont constantes.

4. Appareil selon la revendication 1, comprenant en outre :

un sélecteur de mode de codage (730) qui choisit si l'on code la vidéo multi-vue en utilisant les différences entre les vecteurs de disparité ou si l'on code la vidéo multi-vue en utilisant les différences des différences entre les vecteurs de disparité en fonction de critères prédéterminés, et définit des informations de mode en fonction d'un résultat de la sélection, et dans lequel le codeur (740) code la vidéo multi-vue en fonction des informations de mode.

5. Appareil selon la revendication 1, dans lequel le calculateur de différence de disparité (720) comprend :

un premier tampon (721) qui stocke les vecteurs de disparité ;
une unité d'exécution de calcul primaire (722) qui calcule des différences entre les vecteurs de disparité stockés dans le premier tampon ;
un second tampon (723) qui stocke les différences entre les vecteurs de disparité ; et
une unité d'exécution de calcul secondaire (724) qui calcule les écarts des différences entre les vecteurs de disparité.

6. Procédé de codage d'une vidéo multi-vue, le procédé consistant à :

recevoir une trame courante et une trame de référence ;
estimer des vecteurs de disparité entre des blocs de la trame courante et de la trame de référence ;
calculer des différences entre les vecteurs de disparité ;
dans lequel la trame courante appartient à une vue courante et la trame de référence appartient à une vue de référence différente de la vue courante,
**caractérisé en ce qu'**il consiste à :

calculer des différences entre les vecteurs de disparité de blocs successifs dans la trame courante et calculer des différences des différences entre les vecteurs de disparité ; et
coder la vidéo multi-vue en utilisant les différences des différences entre les vecteurs de disparité.

7. Procédé selon la revendication 6, dans lequel l'étape d'estimation des vecteurs de disparité entre la trame courante et la trame de référence est en unités d'un nombre prédéterminé de blocs.

8. Procédé selon la revendication 6, dans lequel les différences entre les vecteurs de disparité sont constantes.

9. Procédé selon la revendication 6, consistant en outre à :

choisir si l'on code la vidéo multi-vue en utilisant les différences entre les vecteurs de disparité ou si l'on code la vidéo multi-vue en utilisant les différences des différences entre les vecteurs de disparité ; et
définir des informations de mode en fonction d'un résultat de la sélection, et dans lequel le codage de la vidéo multi-vue consiste à coder la vidéo multi-vue en fonction des informations de mode.

10. Procédé selon la revendication 6, dans lequel calculer les différences entre les vecteurs de disparité ou les différences des différences entre les vecteurs de disparité estimés consiste à :

stocker les vecteurs de disparité ;
calculer les différences entre les vecteurs de disparité ;
stocker les différences entre les vecteurs de disparité ; et
calculer les différences des différences entre les vecteurs de disparité.

11. Appareil pour décoder une vidéo multi-vue, lequel appareil comprend :

une unité de vérification de mode de codage (910) qui vérifie des informations de mode indiquant un mode de codage de vidéo multi-vue comprises dans la vidéo multi-vue codée ;
une unité de détermination de vecteur de disparité (920) qui détermine des vecteurs de disparité entre des blocs d'une trame courante et d'une trame de référence de la vidéo multi-vue en fonction d'un résultat de vérification des informations de mode, dans lequel la trame courante appartient à une vue courante et la trame de référence appartient à une vue de référence différente de la vue courante ; et
un décodeur (930) qui décode la vidéo multi-vue en utilisant les vecteurs de disparité ;
**caractérisé en ce que** :

les informations de mode indiquant le mode de codage de vidéo multi-vue indiquent si un bloc courant de la vidéo multi-vue est codé en utilisant les différences des différences entre les vecteurs de disparité, et l'unité de détermination de vecteur de disparité (920), si les informations de mode indiquent que le bloc courant de la vidéo multi-vue est codé en utilisant la différence des différences entre les vecteurs de disparité, additionne une différence précédente des vecteurs de disparité et la différence des différences des vecteurs de disparité afin de déterminer une différence courante des vecteurs de disparité, et additionne le vecteur de disparité d'un bloc précédent et la différence courante de vecteurs de disparité afin de déterminer le vecteur de disparité du bloc courant.

12. Appareil selon la revendication 11, dans lequel l'unité de détermination de vecteur de disparité (920), si les informations de mode indiquent que la vidéo multi-vue est codée en utilisant les différences entre les vecteurs de disparité et une différence d'un vecteur de disparité DVi d'un bloc positionné en un endroit courant i est dDVi, additionne un vecteur de disparité DVi-I d'un bloc précédent et la différence dDVi du vecteur de disparité DVi pour déterminer le vecteur de disparité DVi du bloc positionné à l'endroit courant i.

13. Appareil selon la revendication 11, dans lequel l'unité de détermination de vecteur de disparité (920), si les informations de mode indiquent que la vidéo multi-vue est codée en utilisant les différences des différences entre les vecteurs de disparité et une différence d'une différence dDVi d'un vecteur de disparité DVi d'un bloc positionné en un endroit courant i est ddDVi, additionne une différence dDVi-1 d'un vecteur de disparité DVi-I d'un bloc précédent et la différence ddDVi de la différence dDVi du vecteur de disparité DVi afin de déterminer la différence dDVi du vecteur de disparité DVi du bloc positionné à l'endroit courant i, et additionne le vecteur de disparité DVi-I du bloc précédent et la différence dDVi du vecteur de disparité DVi afin de déterminer le vecteur de disparité DVi du bloc positionné à l'endroit courant i.

14. Procédé pour décoder une vidéo multi-vue, lequel procédé consiste à :

vérifier des informations de mode indiquant un mode de codage de vidéo multi-vue comprises dans une vidéo multi-vue codée ; déterminer des vecteurs de disparité entre des blocs d'une trame courante et d'une trame de référence de la vidéo multi-vue en fonction d'un résultat de vérification des informations de mode, dans lequel la trame courante appartient à une vue courante et la trame de référence appartient à une vue de référence différente de la vue courante ; et décoder la vidéo multi-vue en utilisant les vecteurs de disparité ;
**caractérisé en ce que** :

lors de l'étape de vérification, les informations de mode indiquant le mode de codage de la vidéo multi-vue indiquent si un bloc courant de la vidéo multi-vue sont codées en utilisant des différences des différences entre des vecteurs de disparité, et on additionne, si les informations de mode indiquent que le bloc courant de la vidéo multi-vue est codé en utilisant la différence des différences entre les vecteurs de disparité, une différence précédente des vecteurs de disparité et la différence des différences des vecteurs de disparité afin de déterminer une différence courante des vecteurs de disparité, et on additionne le vecteur de disparité d'un bloc précédent et la différence courante de vecteurs de disparité afin de déterminer le vecteur de disparité du bloc courant.

15. Procédé selon la revendication 14, dans lequel déterminer les vecteurs de disparité consiste à :
si les informations de mode indiquent que la vidéo multi-vue est codée en utilisant les différences entre les vecteurs de disparité et une différence d'un vecteur de disparité DVi d'un bloc positionné en un endroit courant i est dDVi, additionner un vecteur de disparité DVi-I d'un bloc précédent et la différence dDVi du vecteur de disparité DVi afin de déterminer le vecteur de disparité DVi du bloc positionné à l'endroit courant i.

16. Procédé selon la revendication 14, dans lequel déterminer les vecteurs de disparité consiste à :
si les informations de mode indiquent que la vidéo multi-vue est codée en utilisant les différences des différences entre les vecteurs de disparité et une différence d'une différence dDVi d'un vecteur de disparité DVi d'un bloc positionné à un endroit courant i est ddDVi, additionner une différence dDVi-1 d'un vecteur de disparité DVi-I d'un bloc précédent et la différence ddDVi de la différence dDVi du vecteur de disparité DVi afin de déterminer la différence dDVi du vecteur de disparité DVi du bloc positionné à l'endroit courant i ; et additionner le vecteur de disparité DVi-I du bloc précédent et la différence dDVi du vecteur de disparité DVi afin de déterminer le vecteur de disparité DVi du bloc positionné à l'endroit courant i.

17. Support d'enregistrement lisible par ordinateur stockant un programme informatique pour exécuter un procédé de codage d'une vidéo multi-vue, le procédé consistant à :

recevoir une trame courante et une trame de référence ; estimer des vecteurs de disparité entre des blocs de la trame courante et de la trame de référence ; calculer des différences entre les vecteurs de disparité, dans lequel la trame courante appartient à une vue courante et la trame de référence appartient à une vue de référence différente de la vue courante ;
**caractérisé en ce qu'**il consiste à :
calculer des différences entre les vecteurs de disparité de blocs successifs dans la trame courante et calculer des différences des différences entre les vecteurs de disparité ; et coder la vidéo multi-vue en utilisant les différences des différences entre les vecteurs de disparité.

**18.** Support d'enregistrement lisible par ordinateur stockant un programme informatique pour exécuter un procédé de décodage d'une vidéo multi-vue, le procédé consistant à :

vérifier des informations de mode indiquant un mode de codage de vidéo multi-vue comprises dans une vidéo multi-vue codée ; déterminer des vecteurs de disparité entre des blocs d'une trame courante et d'une trame de référence de la vidéo multi-vue en fonction d'un résultat de vérification des informations de mode, dans lequel la trame courante appartient à une vue courante et la trame de référence appartient à une vue de référence différente de la vue courante ; et décoder la vidéo multi-vue en utilisant les vecteurs de disparité ;

**caractérisé en ce que** :

les informations de mode indiquant le mode de codage de vidéo multi-vue indiquent si un bloc courant de la vidéo multi-vue est codé en utilisant les différences des différences entre les vecteurs de disparité, et si les informations de mode indiquent que le bloc courant de la vidéo multi-vue est codé en utilisant les différences des différences entre les vecteurs de disparité, on additionne une différence précédente des vecteurs de disparité et la différence de la différence des vecteurs de disparité afin de déterminer une différence courante des vecteurs de disparité, et on additionne le vecteur de disparité d'un bloc précédent et la différence courante de vecteurs de disparité afin de déterminer le vecteur de disparité du bloc courant.

# FIG. 1

REFERENCE LIST 0
(130)

CURRENT B
(110)

REFERENCE LIST 1
(120)

$\overrightarrow{MV}$

CURRENT BLOCK

CO-LOCATED BLOCK

$\overrightarrow{MV_{L0}}$

$\overrightarrow{MV_{L1}}$

102

104

$TR_D$

$TR_B$

TIME

# FIG. 2

| 1 | 2 | 3 |
|---|---|---|
| 4 | c |   |

# FIG. 3

EP 1 927 249 B1

# FIG. 4

# FIG. 5

# FIG. 6

AMPLITUDE OF DV

$DV_i$   $DV_2$   $DV_3$   $DV_n$

$= dDV$

# FIG. 7

EP 1 927 249 B1

# FIG. 8

```
START
  │
  ▼
```

RECEIVE CURRENT FRAME AND
REFERENCE FRAME AND ESTIMATE
DISPARITY VECTORS BETWEEN FRAMES ── S810

```
  │
  ▼
```

CALCULATE DEVIATIONS OF DISPARITY
VECTORS OR DEVIATIONS OF
DEVIATIONS OF DISPARITY VECTORS ── S820

```
  │
  ▼
```

ENCODE MULTI-VIEW VIDEO USING
DEVIATIONS OF DISPARITY VECTORS
OR DEVIATIONS OF DEVIATIONS
OF DISPARITY VECTORS ── S830

```
  │
  ▼
END
```

# FIG. 9

| 910 | 920 | 930 |
|---|---|---|
| ENCODING MODE CHECKING UNIT | DISPARITY VECTOR DETERMINING UNIT | DECODER |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KIM Y et al.** Efficient disparity vector coding for multiview sequences. *SIGNAL PROCESSING. IMAGE COMMUNICATION,* 09 June 2004, vol. 19 (6), ISSN 0923-5965, 539-553